# EUROPÄISCHE PATENTSCHRIFT

(11) **EP 2 883 671 B1**
(45) Veröffentlichungstag und Bekanntmachung des Hinweises auf die Patenterteilung: **24.04.2019**
(21) Anmeldenummer: 14193286.3
(22) Anmeldetag: 14.11.2014
(51) Int. Cl.: B29B 9/06, B26D 1/38, B26D 5/00, B26D 7/08

(54) **Verfahren und Vorrichtungen zum verschleißüberwachten Granulieren**
Methods and devices for granulation with wear monitoring
Procédés et dispositifs de granulation ayant une surveillance de l'état d'usure

(30) Priorität: 13.12.2013 DE 102013114004
(43) Veröffentlichungstag der Anmeldung: 17.06.2015
(73) Patentinhaber: Maag Automatik GmbH, 63762 Großostheim (DE)
(72) Erfinder: Fischer, Jochen, 09125 Chemnitz (DE); Zollitsch, Ludwig, 70825 Korntal-Münchingen (DE); Kreuz, Ulrich, 71729 Erdmannshausen (DE)
(74) Vertreter: Klunker IP Patentanwälte PartG mbB

(56) Entgegenhaltungen:
- DE-A1- 4 214 675
- DE-A1- 19 933 497
- DE-A1-102004 019 742
- DE-A1-102007 016 347
- DE-A1-102008 020 502
- DE-A1-102008 033 425
- DE-C1- 4 413 716
- JP-A- H02 310 009

## Beschreibung

Die vorliegende Erfindung betrifft Stranggranulatoren sowie Verfahren zum verschleißüberwachten Granulieren eines oder mehrerer Kunststoffstränge.

Es ist bekannt, Kunststoffstränge mittels einer Messerwalze und einem damit zusammenwirkenden Ambossmesser eines Stranggranulators zu Granulat zu pelletieren. Wenn bei einem derartigen Stranggranulator die Messerwalze und/oder das Ambossmesser abgenutzt sind, kommt es zu einer Verminderung der Granulatqualität. In diesem Zusammenhang ist es bekannt, das hergestellte Granulat optisch zu prüfen, um anhand der Granulatqualität Rückschlüsse darauf zu ziehen, ob das Ambossmesser und/oder die Messerwalze des Granulators verschlissen sind und erneuert werden müssen.

Da eine derartige Verschleißüberwachung von einer Bedienperson mit dem bloßen Auge durchgeführt wird, kommt es häufig dazu, dass die Messerwalze und/oder das Ambossmesser zu früh oder zu spät gewechselt werden.

In DE 37 08 453 A1 wird vorgeschlagen, den Verschleiß des Ambossmessers eines Kunststoffstranggranulators induktiv, kapazitiv, optisch oder durch Ultraschallprüfung zu messen, ohne dies jedoch detaillierter auszuführen.

Aus DE 10 2007 016 347 A1 ist ein Kunststoffstranggranulator bekannt, bei dem die Prozess- und Zustandsüberwachung mittels eines Schwingungssensors erfolgt. Der erfasste Ist-Frequenzverlauf wird mit einem Referenz-Frequenzverlauf verglichen, und durch mathematische Frequenzanalyseverfahren ist eine differenzierte Analyse im Hinblick auf bestimmte signifikante Ereignisse oder signifikante Zustände oder Systemkomponenten möglich, einschließlich der Überwachung des Verschleißes der Granuliervorrichtung.

Der Erfindung liegt die Aufgabe zu Grunde, den Verschleiß der Messerwalze und/oder eines damit zusammenwirkenden Ambossmessers des Granulators genauer zu überwachen.

Diese Aufgabe wird durch zwei alternative Stranggranulatoren sowie zugehörige Granulierverfahren gemäß den unabhängigen Ansprüchen gelöst. In davon abhängigen Ansprüchen sind vorteilhafte Ausgestaltungen und Weiterbildungen der Erfindung angegeben.

Das Verfahren zum verschleißüberwachten Granulieren eines oder mehrerer Kunststoffstränge gemäß einem ersten Aspekt der Erfindung wie in Anspruch 1 beansprucht umfasst den Schritt des Granulierens der Stränge mittels einer Messerwalze und eines damit zusammenwirkenden Ambossmessers und ist gekennzeichnet durch die weiteren Schritte des Erfassens zumindest eines Kraftprüfwerts, der von einer zum Granulieren der Stränge aufgewendeten Kraft abhängt, wobei zumindest eine Verformung, eine Kraft oder eine Stromaufnahme eines Antriebsmotors für die Messerwalze als der zumindest eine Kraftprüfwert erfasst wird, und des Ableitens eines Verschleißzustandes des Ambossmessers und/oder der Messerwalze aus dem erfassten Kraftprüfwert.

Ein entsprechender Stranggranulator zum verschleißüberwachten Granulieren eines oder mehrerer Kunststoffstränge wie in Anspruch 8 beansprucht umfasst eine Messerwalze und ein damit zusammenwirkendes Ambossmesser zum Granulieren der Stränge und ist gekennzeichnet durch zumindest eine Kraftprüfwerterfassungseinrichtung, die eingerichtet ist, zumindest einen von einer zum Granulieren der Stränge aufgewendeten Kraft abhängigen Kraftprüfwert zu erfassen, und eine Auswerteeinrichtung, die eingerichtet ist, einen Verschleißzustand des Ambossmessers und/oder der Messerwalze aus dem erfassten Kraftprüfwert abzuleiten, wobei die Kraftprüfwerterfassungseinrichtung einen Verformungssensor aufweist, um eine Verformung als Kraftprüfwert zu erfassen, und/ oder einen Kraftsensor aufweist, um eine Kraft als Kraftprüfwert zu erfassen, und/ oder eine Stromaufnahmeerfassungseinrichtung aufweist, um eine Stromaufnahme eines Antriebsmotors der Messerwalze als Kraftprüfwert zu erfassen. Mit diesem Stranggranulator kann dementsprechend das zuvor beschriebene Granulierverfahren gemäß dem ersten Aspekt der Erfindung ausgeführt werden.

Entsprechend der Erfindung wird also der Verschleiß des Ambossmessers und /oder der Messerwalze anhand eines von einer zum Granulieren erforderlichen Granulierkraft abhängigen Kraftprüfwerts überwacht. Bei dieser Granulierkraft kann es sich z.B. um die beim Granulieren auf die Messerwalze und/oder das Ambossmesser ausgeübte Kraft handeln. Es hat sich herausgestellt, dass an Hand eines solchen Kraftprüfwertes der Verschleißzustand des Ambossmessers und/oder der Messerwalze sehr genau bestimmt werden kann.

Gemäß der Erfindung wird also ein Kraftprüfwert ausgewertet, der von einer zum Granulieren erforderlichen Granulierkraft abhängt, d.h. abgesehen von etwaigen Messstörungen bei einer vorgegebenen ggf. zeitlich gemittelten Granulierkraft einen damit verknüpften vorbestimmten Wert annimmt. Bei derartigen Messstörungen kann es sich z.B. um durch Druckschwankungen bedingte Messstörungen und/oder einem bestimmbaren Offset handeln. Die Granulierkraft kann z.B. durch eine begrenzte Reaktionsgeschwindigkeit der Kraftprüfwerterfassungseinrichtung beim Erfassen zeitlich gemittelt werden.

Da der Kraftprüfwert von einer zum Granulieren erforderlichen Kraft abhängt, können aus ihm Rückschlüsse auf diese Granulierkraft gezogen werden (um dann daraus den Verschleißzustand abzuleiten). Somit wird ein Kraftprüfwert erfasst, aus dem die Granulierkraft oder ein Mittelwert davon ableitbar ist, so dass z.B. die Auswerteeinrichtung eingerichtet ist, die Granulierkraft oder einen Mittelwert davon aus dem Kraftprüfwert abzuleiten, um dann daraus den Verschleißzustand abzuleiten.

Bei dem zumindest einen Kraftprüfwert handelt es sich insbesondere um eine durch die zum Granulieren der Stränge aufgewendete Granulierkraft hervorgerufene Verformung, die mittels zumindest eines Verformungssensors erfasst wird. Als Verformungssensor kann dabei beispielsweise ein Dehnungsmessstreifen oder ein Piezosensor dienen.

Ebenfalls kann erfindungsgemäss die Kraftprüfwerterfassungseinrichtung auch zumindest einen beliebigen Kraftsensor, insbesondere eine Kraftmessdose, umfassen, der z.B. auf zumindest einem Dehnungsmessstreifen und/oder zumindest einem Piezosensor basieren kann, um die Granulierkraft oder eine davon abhängige Kraft zu erfassen.

Ebenso kann erfindungsgemäss auch die Stromaufnahme eines Antriebsmotors für die Messerwalze als Kraftprüfwert erfasst werden.

Als Verschleißzustand kann insbesondere ein Verschleißzustand ermittelt werden, bei dem das Ambossmesser und/oder die Messerwalze zu erneuern ist, und/oder ein Verschleißzustand, bei dem das Ambossmesser und/oder die Messerwalze noch nicht zu erneuern ist. Insbesondere kann eine erwartete Restlebensdauer, die beispielsweise in Zeiteinheiten oder als Bruchteil B einer Gesamtlebensdauer angegeben werden kann, als Verschleißzustand abgeleitet werden. Ebenso kann umgekehrt auch eine bereits "verbrauchte" Lebensdauer 1-B in Bezug auf die Gesamtlebensdauer abgeleitet werden.

Normalerweise wächst die zum Granulieren der Stränge erforderliche Kraft und der Kraftprüfwert in präzise vorhersagbarer Weise mit dem Verschleiß der Messerwalze und/oder des damit zusammenwirkenden Ambossmessers an. Dementsprechend kann der Verschleißzustand beispielsweise bestimmt werden, indem der zumindest eine Kraftprüfwert oder zumindest ein daraus abgeleiteter Wert, insbesondere eine daraus abgeleitete zum Granulieren erforderliche (mittlere) Granulierkraft, mit einem oder mehreren geeigneten Schwellenwerten verglichen wird.

Insbesondere ein derartiger Schwellenwertvergleich aber auch andere Auswertungsmethoden führen zu besonders genauen Ergebnissen, wenn der Kraftprüfwert keine oder nur geringe vibrationsartige Fluktuationen aufweist oder vibrationsartige Fluktuationen des Kraftprüfwerts beim Auswerten (d.h. dem Schritt des Ableitens des Verschleißzustandes) entfernt oder reduziert werden.

Gemäß einer bevorzugten Ausführungsform erfolgt das Erfassen des Kraftprüfwertes daher derart, dass der Kraftprüfwert, während zwei aufeinanderfolgende Messer der Messerwalze auf einen der Stränge treffen oder - wenn nur ein Strang granuliert wird - auf diesen einen Strang treffen, bei gleichbleibenden weiteren Granulierparameterwerten keine oder geringe Fluktuationen aufweist, oder das Auswerten umfasst ein Reduzieren von Fluktuationen des Kraftprüfwerts, die, während zwei aufeinanderfolgende Messer der Messerwalze auf den Strang oder einen der Stränge treffen, auftreten, z.B. durch Mittelung oder Bestimmung der Maxima und/oder Minima des fluktuierenden Kraftprüfwerts.

Gemäß einer besonders bevorzugten Ausführungsform erfolgt das Erfassen des Kraftprüfwertes daher derart, dass der Kraftprüfwert während einer Umdrehung der Messerwalze bei gleichbleibenden weiteren Granulierparameterwerten keine oder geringe Fluktuationen aufweist oder das Auswerten umfasst ein Reduzieren von Fluktuationen des Kraftprüfwerts, die während einer Umdrehung der Messerwalze auftreten.

Beispielsweise kann ein Verschleißzustand abgeleitet werden, der impliziert, dass das Ambossmesser und/oder die Messerwalze zu erneuern ist, wenn der Kraftprüfwert den Schwellenwert erreicht oder überschreitet.

Vorzugsweise wird automatisch ein Vorgang initiiert oder beendet, wenn ein vorgegebener Verschleißzustand ermittelt wird, z.B. wenn der Kraftprüfwert oder ein daraus abgeleiteter Wert den Schwellenwert erreicht oder überschreitet und/oder ein Verschleißzustand ermittelt wird, der anzeigt, dass das Ambossmesser und/oder die Messerwalze zu erneuern sind. Beispielsweise kann bei Ermittlung eines vorgegebenen Verschleißzustandes ein akustisches Warnsignal und/oder eine geeignete Anzeige aktiviert werden. Alternativ oder zusätzlich kann der Granulierprozess bei Ermittlung des vorgegebenen Verschleißzustandes automatisch beendet werden, z.B. mittels einer Unterbrechungseinrichtung.

Wie erwähnt, kann die zum Granulieren erforderliche Kraft überdies von weiteren Granulierparametern abhängen, beispielsweise von der Drehgeschwindigkeit der Messerwalze. Die zum Granulieren erforderliche Kraft kann dann aus dem zumindest einen Kraftprüfwert in Kombination mit einem oder mehreren konkreten Granulierparameterwerten ableitbar sein.

Folglich wird gemäß einer bevorzugten Ausführungsform der Verschleißzustand mittels der Auswerteeinrichtung aus dem Kraftprüfwert in Kombination mit einem oder mehreren derartigen weiteren das Granulieren der Stränge kennzeichnenden Granulierparameterwerten abgeleitet. Der oder die weiteren Granulierparameterwerte können vorgegeben sein oder erfasst werden. Der Stranggranulator umfasst dementsprechend vorzugsweise zumindest eine weitere Erfassungseinrichtung zum Erfassen des weiteren Granulierparameterwerts. Beispielsweise kann der oben genannte Schwellenwert abhängig von dem oder den weiteren Granulierparameterwerten variieren.

Bei dem oder den weiteren Granulierparametern kann es sich neben der zuvor genannten Drehgeschwindigkeit der Messerwalze auch um die Vorschubgeschwindigkeit der Stränge, die Anzahl gleichzeitig granulierter Stränge und/oder eine Eigenschaft der Stränge handeln, wie zum Beispiel den Strangdurchmesser, die Strangfestigkeit und/oder eine Werkstoffeigenschaft des Strangmaterials. Die Strangfestigkeit hängt dabei nicht nur von dem Strangmaterial ab, sondern auch von dessen Temperatur, d.h. z.B. davon, wie stark es nach seiner Extrusion abgekühlt ist.

Der Kraftprüfwert und/oder der daraus abgeleitete Verschleißzustand werden vorzugsweise mittels einer Anzeigeeinrichtung des Stranggranulators angezeigt.

Ein Verfahren zum verschleißüberwachten Granulieren eines oder mehrere Kunststoffstränge gemäß einem zweiten Aspekt der Erfindung wie im Anspruch 11 beansprucht umfasst den Schritt des Granulierens der Stränge mittels einer Messerwalze und eines damit zusammenwirkenden Ambossmessers und ist gekennzeichnet durch die weiteren Schritte des Bereitstellens einer Datensammlung, in der Kraftprüfwerte mit Verschleißzuständen des Ambossmessers und/oder der Messerwalze verknüpft sind, des Erfassens zumindest eines Kraftprüfwertes, der von einer zum Granulieren der Stränge aufgewendeten Kraft abhängt, wobei zumindest eine Verformung, eine Kraft oder eine Stromaufnahme eines Antriebsmotors für die Messerwalze als der zumindest eine Kraftprüfwert erfasst wird, und des Anzeigens des erfassten Kraftprüfwertes.

Ein entsprechendes Granuliersystem gemäß dem zweiten Aspekt der Erfindung zum verschleißüberwachten Granulieren eines oder mehrerer Kunststoffstränge wie in Anspruch 12 beansprucht umfasst einen Stranggranulator, umfassend eine Messerwalze und ein damit zusammenwirkendes Ambossmesser zum Granulieren der Stränge, und ist dadurch gekennzeichnet, dass das Granuliersystem weiterhin eine Datensammlung umfasst, in der Kraftprüfwerte mit Verschleißzuständen des Ambossmessers und/oder der Messerwalze verknüpft sind, und dass der Stranggranulator weiterhin zumindest eine Kraftprüfwerterfassungseinrichtung umfasst, die eingerichtet ist, zumindest einen von einer zum Granulieren der Stränge aufgewendeten Kraft abhängigen Kraftprüfwert zu erfassen, wobei die Kraftprüfwerterfassungseinrichtung einen Verformungssensor aufweist, um eine Verformung als Kraftprüfwert zu erfassen, und/oder einen Kraftsensor aufweist, um eine Kraft als Kraftprüfwert zu erfassen, und/oder eine Stromaufnahmeerfassungseinrichtung aufweist, um eine Stromaufnahme eines Antriebsmotors der Messerwalze als Kraftprüfwert zu erfassen, und eine Anzeigeeinrichtung, die eingerichtet ist, den Kraftprüfwert anzuzeigen.

Gemäß dem zweiten Aspekt der Erfindung wird also der im Zusammenhang mit dem zuvor beschriebenen ersten Aspekt der Erfindung genauer erläuterte Kraftprüfwert stets angezeigt, so dass eine Bedienperson mit Hilfe der Datensammlung daraus einen Verschleißzustand des Ambossmessers und/oder der Messerwalze, wie er zuvor für den ersten Aspekt der Erfindung beschrieben wurde, ableiten kann. Dabei erfolgt wie bei dem ersten Aspekt der Erfindung das Erfassen des Kraftprüfwertes vorzugsweise derart, dass der Kraftprüfwert, während zwei aufeinanderfolgende Messer der Messerwalze auf den Strang oder einen der Stränge treffen, oder während einer Umdrehung der Messerwalze bei gleichbleibenden weiteren Granulierparameterwerten keine oder geringe Fluktuationen aufweist, z.B. durch Mittelung oder Bestimmung der Maxima und/oder Minima einer erfassten Messgröße.

Dabei können auch, wie oben für den ersten Aspekt der Erfindung beschrieben, ein oder mehrere weitere das Granulieren der Stränge kennzeichnende Granulierparameter in die Auswertung eingehen, d.h. in der Datensammlung können Kombinationen aus einem Kraftprüfwert und einem oder mehreren weiteren konkreten Granulierparameterwerten mit Verschleißzuständen verknüpft sein. Dementsprechend ist auch beim zweiten Aspekt der Erfindung der Stranggranulator vorzugsweise überdies mit einer weiteren Erfassungseinrichtung zum Erfassen des oder der weiteren Granulierparameterwerte ausgestattet, wobei bei dem zweiten Aspekt der Erfindung in diesem Fall die Anzeigeeinrichtung oder eine weitere Anzeigeeinrichtung vorzugsweise eingerichtet ist, auch den zumindest einen weiteren Granulierparameterwert anzuzeigen.

Wie auch beim ersten Aspekt der Erfindung wird als Kraftprüfwert vorzugsweise eine Verformung oder eine Kraft oder eine Stromaufnahme eines Antriebsmotors der Messerwalze mittels eines Verformungssensors bzw. eines Kraftsensors bzw. einer Stromaufnahmeerfassungseinrichtung erfasst.

Weitere Merkmale und Vorteile der Erfindung ergeben sich aus der folgenden Beschreibung der erfindungsgemäßen Ausführungsbeispiele sowie weiterer Ausführungsalternativen im Zusammenhang mit den Zeichnungen, die schematisch zeigen:
- Figur 1:: einen Stranggranulator gemäß einem ersten Aspekt der Erfindung;
- Figur 2:: ein Verfahren zum verschleißüberwachten Graunlieren gemäß dem ersten Aspekt der Erfindung;
- Figur 3:: ein Granuliersystem gemäß einem zweiten Aspekt der Erfindung und
- Figur 4:: ein Verfahren zum verschleißüberwachten Granulieren gemäß dem zweiten Aspekt der Erfindung.

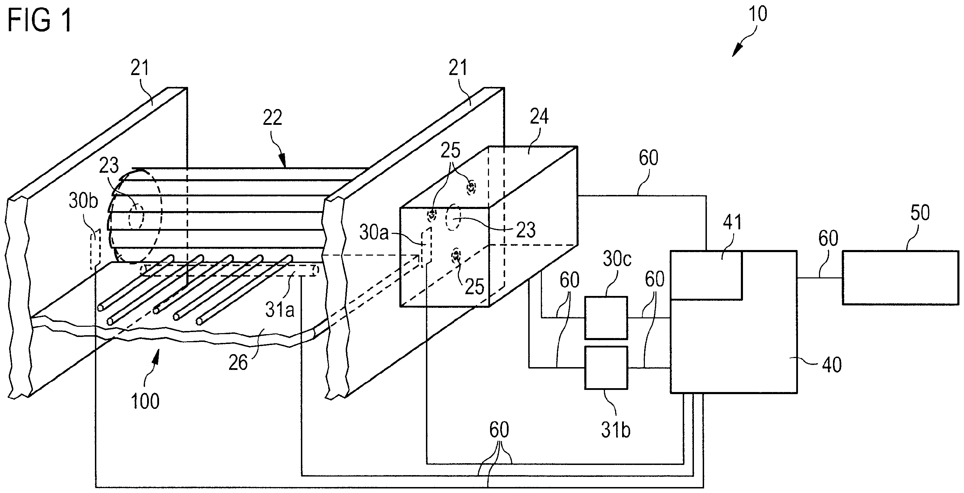

Figur 1 zeigt einen Stranggranulator 10 zum verschleißüberwachten Granulieren eines oder mehrerer Kunststoffstränge 100 gemäß dem ersten Aspekt der Erfindung.

Der Stranggranulator 10 verfügt über eine Messerwalze 22, mit der die zuvor extrudierten und dann abgekühlten Stränge 100 an einem Ambossmesser 26 abgeschnitten werden. Das Ambossmesser 26 ist an Montageplatten 21 fixiert, und die Messerwalze 22 ist mittels Lagern 23 an den Montageplatten 21 drehbar gelagert. Die Messerwalze 22 kann von der an den Fixierpunkten 25 an der Montageplatte 21 fixierten Antriebseinrichtung 24 zum Zerkleinern der Stränge 100 angetrieben werden.

An beiden Montageplatten 21 sind auf Dehnungsmessstreifen basierende Kraftprüfwerterfassungseinrichtungen 30a, 30b angebracht, um durch das Granulieren hervorgerufene Verformungen der Montageplatten 21 als Kraftprüfwerte zu erfassen. Anstatt mittels Dehnungsmessstreifen können Deformationen der Montageplatten 21 natürlich auch z. B. mittels Piezosensoren erfasst werden. Überdies umfasst der Stranggranulator 10 eine auf einer Stromaufnahmeerfassungseinrichtung basierende Kraftprüfwerterfassungseinrichtung 30c, mit der zusätzlich die Stromaufnahme der Antriebseinrichtung 24 als weiterer Kraftprüfwert erfasst wird. Alternativ oder zusätzlich dazu kann auch die zum Granulieren aufgewendete Kraft oder eine davon abhängige Kraft mittels einer beliebigen Kraftmesseinrichtung als Kraftprüfwert erfasst werden. Die Kraftprüfwerterfassungseinrichtungen 30a, 30b und 30c sind vorzugsweise derart träge, dass der Kraftprüfwert während einer Umdrehung der Messerwalze bei gleichbleibenden weiteren Granulierparameterwerten keine oder geringe Fluktuationen aufweist.

Weiterhin umfasst der Stranggranulator 10 zwei weitere Erfassungseinrichtungen 31a und 31b. Mit der ersten weiteren Erfassungseinrichtung 31a wird die Vorschubgeschwindigkeit der Stränge 100 als ein weiterer Granulierparameterwert erfasst. Mit der zweiten weiteren Erfassungseinrichtung 31b wird die Drehgeschwindigkeit der Messerwalze 22 als ein weiterer Granulierparameterwert erfasst.

Diverse Komponenten des Stranggranulators 10 sind mit Datenleitungen 60 miteinander verbunden, insbesondere sind die Kraftprüfwerterfassungseinrichtungen 30a, 30b, 30c und die weiteren Erfassungseinrichtungen 31a, 31b über Datenleitungen 60 mit einer Auswerteeinrichtung 40 verbunden. Diese Auswerteeinrichtung 40 ermittelt anhand der erfassten Kraftprüfwerte eine mittlere zum Granulieren aufgewendete Kraft (z.B. die mittlere Kraft, die während einer Umdrehung der Messerwalze beim Granulieren auf die Messerwalze und/oder das Ambossmesser ausgeübt wird) oder einen dazu proportionalen Wert. Daraus und aus den von den weiteren Erfassungseinrichtungen 31a, 31b erfassten weiteren Granulierparameterwerten sowie aus in der Auswerteeinrichtung 40 hinterlegten weiteren Granulierparameterwerten hinsichtlich physikalischer Eigenschaften der Stränge 100 leitet die Auswerteeinrichtung 40 wiederum einen Verschleißzustand des Ambossmessers 26 und/oder der Messerwalze 22 ab. Grundsätzlich genügt zur Ableitung eines Verschleißzustandes des Ambossmessers 26 und/oder der Messerwalze 22 ein einzelner Kraftprüfwert. Die Verwendung mehrerer Kraftprüfwerte wie bei dem vorliegenden Ausführungsbeispiel kann jedoch die Genauigkeit erhöhen. Im vorliegenden Ausführungsbeispiel erfolgt das Auswerten durch Vergleichen der Kraftprüfwerte mit von den weiteren Granulierparameterwerten abhängigen vorab bestimmten und in der Auswerteeinrichtung hinterlegten Schwellenwertkurven, in denen jeweils ein Schwellenwert in Abhängigkeit von den Granulierparameterwerten aufgetragen ist. Dabei sind verschiedene Schwellenwertkurven hinterlegt, um dadurch verschiedene Abnutzungsgrade von Ambossmesser 26 und Messerwalze 22 zu unterscheiden.

Bei dem Verschleißzustand kann es sich gemäß der Erfindung wie im vorliegenden Ausführungsbeispiel um einen kombinierten Verschleißzustand von Ambossmesser 26 und Messerwalze 22 handeln, der eine kombinierte Restlebensdauer für Ambossmesser 26 und Messerwalze 22 angibt, nach deren Ablauf diese beiden Einheiten 22, 26 ausgetauscht werden sollen, wobei unberücksichtigt bleibt, dass eine dieser beiden Einheiten 22, 26 ggf. weniger stark verschlissen ist als die andere.

Alternativ dazu könnte unter Verwendung einer oder mehrere Kraftprüfwerterfassungseinrichtungen auch ein einzelner Verschleißzustand abgeleitet werden, der nur den Verschleiß der Messerwalze 22 oder nur den Verschleiß des Ambossmessers 26 widerspiegelt, oder zwei Verschleißzustände, von denen einer nur den Verschleiß der Messerwalze 22 und der andere nur den Verschleiß des Ambossmessers 26 widerspiegelt. Wenn beispielsweise das Ambossmesser 26 deutlich schneller verschleißt als die Messerwalze 22, kann an Hand zumindest eines direkt nach Austausch verschlissener Ambossmesser 26 erfassten Kraftprüfwerts der Verschleiß der Messerwalze 22 ermittelt werden. Im Gegensatz dazu kann ein während des Granulierens mit derselben Messerwalze 22 und demselben Ambossmesser 26 bei gleichbleibenden weiteren Granulierparameterwerten auftretender Anstieg der zum Granulieren erforderlichen Kraft im Wesentlichen auf den Verschleiß des deutlich kurzlebigeren Ambossmessers 26 zurückgeführt werden.

Vorliegend handelt es sich bei dem Verschleißzustand um eine verbleibende Restlebensdauer, die mittels der Anzeigeeinrichtung 50 als Prozentangabe angezeigt wird. Alternativ oder zusätzlich können mittels der Anzeigeeinrichtung 50 auch einer oder mehrere der Kraftprüfwerte und/oder einer oder mehrere der weiteren Granulierparameterwerte angezeigt werden.

Die Auswerteeinrichtung 40 umfasst weiterhin eine Signaleinrichtung 41, von der ein akustisches Warnsignal und/oder eine Anzeige aktiviert werden, wenn das Ambossmesser 26 und die Messerwalze 22 auszutauschen sind.

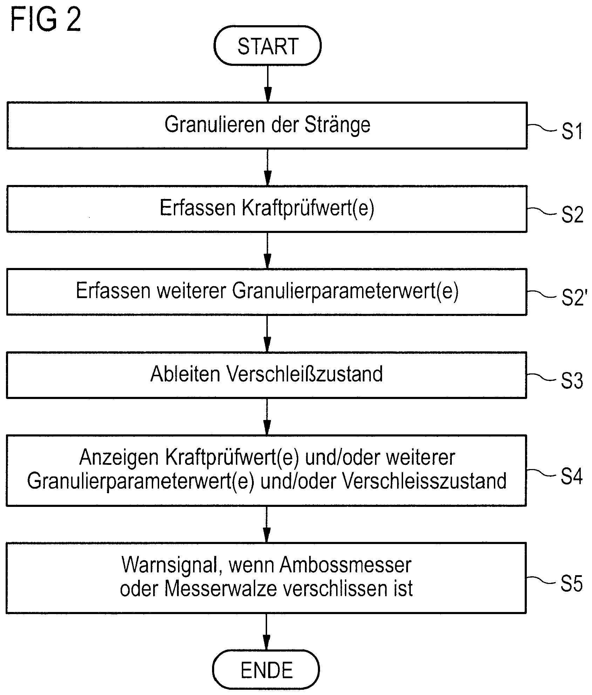

Bei dem in Figur 2 dargestellten, von dem Stranggranulator 10 von Figur 1 ausführbaren Verfahren zum verschleißüberwachten Granulieren gemäß dem ersten Aspekt der Erfindung werden dementsprechend während des Granulierens S1 der Stränge 100 ein oder mehrere Kraftprüfwerte erfasst S2 und ein oder mehrere weitere Granulierparameterwerte erfasst S2'. Aus dem oder den Kraftprüfwerten - ggf. in Kombination mit zumindest einem erfassten und/oder hinterlegten weiteren Granulierparameterwert - wird während des Granulierens mittels der Auswerteeinrichtung 40 ein Verschleißzustand des Ambossmessers 26 und der Messerwalze 22 abgeleitet S3 und mittels der Anzeigeeinrichtung 50 angezeigt S4. Alternativ oder zusätzlich können auch der oder die Kraftprüfwerte und/oder der oder die erfassten und/oder hinterlegten weiteren Granulierparameterwerte angezeigt werden. Wenn ermittelt wird, dass das Ambossmesser 26 und/oder die Messerwalze 22 auszutauschen sind, wird mittels der Signaleinrichtung 41 ein akustisches Warnsignal und/oder eine Warnanzeige aktiviert S5.

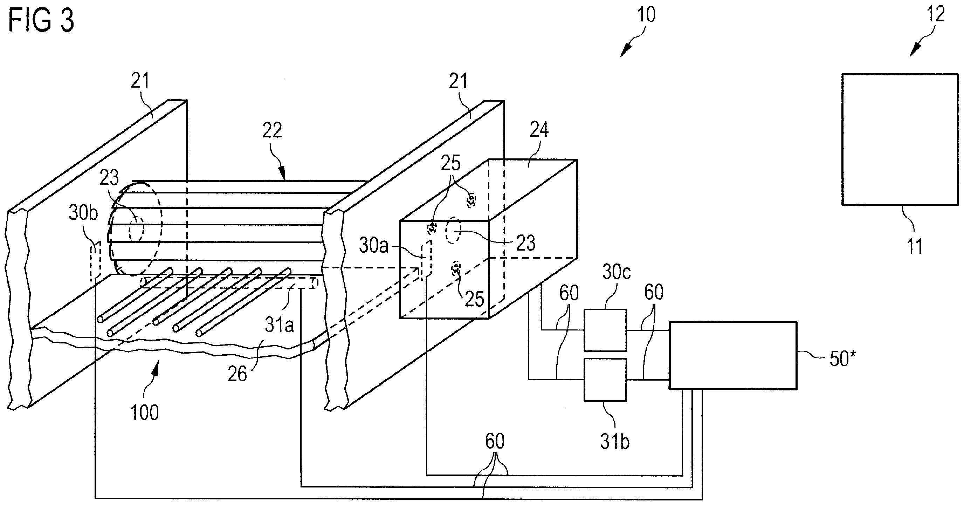

Figur 3 zeigt ein Granuliersystem zum verschleißüberwachten Granulieren eines oder mehrerer Kunststoffstränge 100 gemäß einem zweiten Aspekt der Erfindung. Das Granuliersystem umfasst einen Stranggranulator 10, der im Wesentlichen dieselben Komponenten wie der Stranggranulator von Figur 1 umfasst, wobei identischen Komponenten dieselben Bezugsziffern wie in Figur 1 zugeordnet sind. Allerdings umfasst der Stranggranulator 10 keine Auswerteeinrichtung. Vielmehr sind alle Kraftprüfwerterfassungseinrichtungen 30a, 30b und 30c sowie die weiteren Erfassungseinrichtungen 31a und 31b direkt mit einer Anzeigeeinrichtung 50* verbunden, die die Kraftprüfwerte und die erfassten weiteren Granulierparameterwerte (gleichzeitig oder nacheinander) anzeigt. Dabei sind die Kraftprüfwerterfassungseinrichtungen 30a, 30b und 30c vorzugsweise derart träge, dass der Kraftprüfwert während einer Umdrehung der Messerwalze bei gleichbleibenden weiteren Granulierparameterwerten keine oder geringe Fluktuationen aufweist. Neben dem Stranggranulator 10 umfasst das Granuliersystem 12 auch eine Datensammlung 11, in der Kombinationen aus Kraftprüfwerten und weiteren Granulierparameterwerten mit Verschleißzuständen des Ambossmessers 26 und der Messerwalze 22 verknüpft sind.

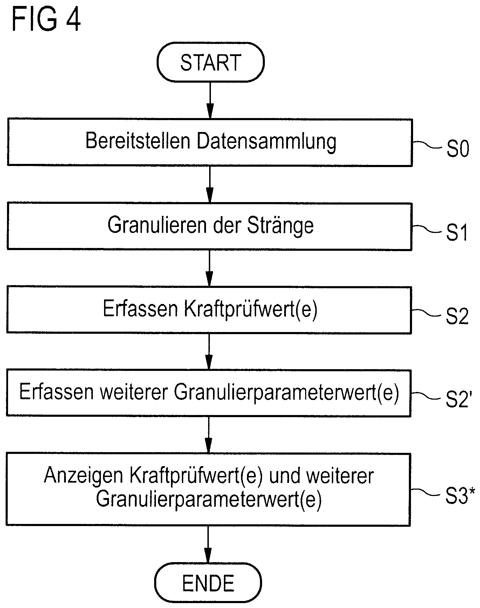

Ein entsprechendes Granulierverfahren gemäß dem zweiten Aspekt der Erfindung, das mit dem in Figur 3 dargestellten Granuliersystem 12 ausführbar ist, ist in Figur 4 dargestellt. Bei dem Verfahren wird vorab die Datensammlung 11 bereitgestellt S0. Während des Granulierens S1 der Stränge wird dann wie bei dem ersten Aspekt der Erfindung zumindest ein Kraftprüfwert erfasst S2 sowie zumindest ein weiterer Granulierparameterwert erfasst S2'. Jedoch werden diese Werte nicht maschinell ausgewertet, sondern mittels der Anzeigeeinrichtung 50* angezeigt S3*. Mithilfe der Datensammlung 11 kann eine Bedienperson aus den angezeigten Werten einen Verschleißzustand des Ambossmessers 26 und/oder der Messerwalze 22 ableiten und entscheiden, ob diese Komponenten auszutauschen sind.

## Patentansprüche

1. Verfahren zum verschleißüberwachten Granulieren eines oder mehrerer Kunststoffstränge (100), umfassend den Schritt des Granulierens (S1) der Stränge (100) mittels einer Messerwalze (22) und einem damit zusammenwirkenden Ambossmesser (26),
**gekennzeichnet durch** die weiteren Schritte:
Erfassen (S2) zumindest eines Kraftprüfwerts, der von einer zum Granulieren der Stränge (100) aufgewendeten Kraft abhängt,
wobei zumindest eine Verformung, eine Kraft oder eine Stromaufnahme eines Antriebsmotors für die Messerwalze (22) als der zumindest eine Kraftprüfwert erfasst wird, und
Ableiten (S3) eines Verschleißzustands des Ambossmessers (26) und/oder der Messerwalze (22) aus dem erfassten Kraftprüfwert.

2. Verfahren nach Anspruch 1, **dadurch gekennzeichnet, dass** beim Ableiten (S3) des Verschleißzustands der zumindest eine Kraftprüfwert oder zumindest ein daraus abgeleiteter Wert mit einem oder mehreren Schwellenwerten verglichen wird.

3. Verfahren nach einem der vorhergehenden Ansprüche, **dadurch gekennzeichnet, dass** das Erfassen (S2) des Kraftprüfwertes derart erfolgt, dass der Kraftprüfwert, während zwei aufeinanderfolgende Messer der Messerwalze (26) auf den Strang oder einen der Stränge (100) treffen, bei gleichbleibenden weiteren das Granulieren (S1) der Stränge (100) kennzeichnenden Granulierparameterwerten keine oder geringe Fluktuationen aufweist oder das Ableiten (S3) des Verschleißzustands ein Reduzieren von Fluktuationen des Kraftprüfwerts umfasst, die, während zwei aufeinanderfolgende Messer der Messerwalze (26) auf den Strang oder einen der Stränge (100) treffen, auftreten.

4. Verfahren nach einem der vorhergehenden Ansprüche, **gekennzeichnet durch** den weiteren Schritt des Aktivierens (S5) eines akustischen Signals oder einer Anzeige, wenn ein vorgegebener Verschleißzustand abgeleitet wird.

5. Verfahren nach einem der vorhergehenden Ansprüche, **dadurch gekennzeichnet, dass** der Verschleißzustand aus dem Kraftprüfwert in Kombination mit einem oder mehreren weiteren das Granulieren (S1) der Stränge (100) kennzeichnenden Granulierparameterwerten abgeleitet wird (S3).

6. Verfahren nach Anspruch 5, **dadurch gekennzeichnet, dass** es sich bei dem oder den weiteren Granulierparameterwerten um eine Drehgeschwindigkeit der Messerwalze (22), eine Vorschubgeschwindigkeit der Stränge (100), eine Anzahl gleichzeitig granulierter Stränge (100) und/oder eine Eigenschaft der Stränge (100), wie Strangdurchmesser, Strangfestigkeit und/oder Strangmaterial, handelt.

7. Verfahren nach einem der vorhergehenden Ansprüche, **gekennzeichnet durch** den Schritt des Anzeigens (S4) des Kraftprüfwerts oder des daraus abgeleiteten Verschleißzustandes.

8. Stranggranulator (10) zum verschleißüberwachten Granulieren eines oder mehrerer Kunststoffstränge (100), umfassend
eine Messerwalze (22) und ein damit zusammenwirkendes Ambossmesser (26) zum Granulieren der Stränge (100),
**gekennzeichnet durch:**
zumindest eine Kraftprüfwerterfassungseinrichtung (30a, 30b, 30c), die eingerichtet ist, zumindest einen von einer zum Granulieren der Stränge (100) aufgewendeten Kraft abhängigen Kraftprüfwert zu erfassen, und
eine Auswerteeinrichtung (40), die eingerichtet ist, einen Verschleißzustand des Ambossmessers (26) und/oder der Messerwalze (22) aus dem erfassten Kraftprüfwert abzuleiten,
wobei die Kraftprüfwerterfassungseinrichtung (30a, 30b, 30c) einen Verformungssensor aufweist, um eine Verformung als Kraftprüfwert zu erfassen, und/oder einen Kraftsensor aufweist, um eine Kraft als Kraftprüfwert zu erfassen, und/oder eine Stromaufnahmeerfassungseinrichtung aufweist, um eine Stromaufnahme eines Antriebsmotors der Messerwalze (22) als Kraftprüfwert zu erfassen.

9. Stranggranulator (10) nach Anspruch 8, **dadurch gekennzeichnet, dass** der Stranggranulator (10) eine Anzeigeeinrichtung (50) umfasst, die eingerichtet ist, den Verschleißzustand anzuzeigen.

10. Stranggranulator (10) nach einem der Ansprüche 8 oder 9, **dadurch gekennzeichnet, dass** die Auswerteeinrichtung (40) eingerichtet ist, den Verschleißzustand aus dem erfassten Kraftprüfwert in Kombination mit einem oder mehreren weiteren das Granulieren der Stränge (100) kennzeichnenden Granulierparameterwerten abzuleiten, wobei der Stranggranulator (10) vorzugsweise zumindest eine weitere Erfassungseinrichtung (31a, 31b) zum Erfassen des oder der weiteren Granulierparameterwerte umfasst.

11. Verfahren zum verschleißüberwachten Granulieren eines oder mehrerer Kunststoffstränge (100), umfassend den Schritt des Granulierens (S1) der Stränge (100) mittels einer Messerwalze (22) und eines damit zusammenwirkenden Ambossmessers (26),
**gekennzeichnet durch** die weiteren Schritte:
Bereitstellen (S0) einer Datensammlung, in der Kraftprüfwerte mit Verschleißzuständen des Ambossmessers (26) und/oder der Messerwalze (22) verknüpft sind,
Erfassen (S2) zumindest eines Kraftprüfwertes, der von einer zum Granulieren der Stränge (100) aufgewendeten Kraft abhängt,
wobei zumindest eine Verformung, eine Kraft oder eine Stromaufnahme eines Antriebsmotors für die Messerwalze (22) als der zumindest eine Kraftprüfwert erfasst wird, und
Anzeigen (S3*) des erfassten Kraftprüfwertes.

12. Granuliersystem (12) zum verschleißüberwachten Granulieren eines oder mehrerer Kunststoffstränge (100), umfassend
einen Stranggranulator (10), umfassend eine Messerwalze (22) und ein damit zusammenwirkendes Ambossmesser (26) zum Granulieren der Stränge (100),
**dadurch gekennzeichnet,**
**dass** das Granuliersystem (12) weiterhin eine Datensammlung (11) umfasst, in der Kraftprüfwerte mit Verschleißzuständen des Ambossmessers (26) und/oder der Messerwalze (22) verknüpft sind, und
**dass** der Stranggranulator (10) weiterhin umfasst:
zumindest eine Kraftprüfwerterfassungseinrichtung (30a, 30b, 30c), die eingerichtet ist, zumindest einen von einer zum Granulieren der Stränge (100) aufgewendeten Kraft abhängigen Kraftprüfwert zu erfassen,
wobei die Kraftprüfwerterfassungseinrichtung (30a, 30b, 30c) einen Verformungssensor aufweist, um eine Verformung als Kraftprüfwert zu erfassen, und/oder einen Kraftsensor aufweist, um eine Kraft als Kraftprüfwert zu erfassen, und/oder eine Stromaufnahmeerfassungseinrichtung aufweist, um eine Stromaufnahme eines Antriebsmotors der Messerwalze (22) als Kraftprüfwert zu erfassen, und
eine Anzeigeeinrichtung (50*), die eingerichtet ist, den Kraftprüfwert anzuzeigen.

## Claims

1. Method for wear monitored granulating one or multiple plastic strands (100) comprising the step of granulating (S1) the strands (100) using a blade roll (22) and an anvil blade (26) cooperating therewith,
**characterized by** the further steps:
detecting (S2) at least one force check value which depends on a force applied for granulating the strands (100),
wherein at least a deformation, a force or a current consumption of a drive motor for the blade roll (22) is detected as the at least one force check value, and
deriving (S3) a wear state of the anvil blade (26) and/or of the blade roll (22) from the detected force check value.

2. The method according to claim 1, **characterized in that** during the deriving (S3) of the wear state of the at least one force check value or at least one value derived therefrom is compared with one or multiple threshold values.

3. The method according to one of the preceding claims, **characterized in that** the detecting (S2) of the force check value occurs in such a way that when two consecutive blades of the blade roll (26) impinge on the strand or one of the strands (100) and at constant further granulation parameter values characterizing the granulation (S1) of the strands (100) the force check value has no or little fluctuation, or the deriving (S3) of the wear state comprises a reduction of fluctuations of the force check value, which occur when two consecutive blades of the blade roll (26) impinge the strand or one of the strands (100).

4. The method according to one of the preceding claims, **characterized by** the further step of activating (S5) an acoustic signal or a display when a predetermined wear state is derived.

5. The method according to one of the preceding claims, **characterized in that** the wear state is derived (S3) from the force check value in combination with one or multiple further granulation parameter values characterizing the granulation (S1) of the strands (100).

6. The method according to claim 5, **characterized in that** the or the further granulation parameter values are a rotation speed of the blade roll (22), a feed speed of the strands (100), a quantity of strands granulated simultaneously and/or a characteristic of the strands (100) such as strand diameter, strand strength and/or strand material.

7. The method according to one of the preceding claims, **characterized by** the step of displaying (S4) the force check value or the wear state derived therefrom.

8. Strand granulator (10) for wear monitored granulating one or multiple plastic strands (100), comprising:
a blade roll (22) and an anvil blade (26) cooperating therewith for granulating the strands (100),
**characterized by:**
at least one force check value detection device (30a, 30b, 30c) which is arranged to detect at least one force check value which depends on a force applied for granulating the strands (100), and
an evaluation device (40) which is arranged to derive a wear state of the anvil blade (26) and/or of the blade roll (22) from the detected force check value,
wherein the force check value detection device (30a, 30b, 30c) has a deformation sensor for detecting a deformation as the force check value and/or a force sensor for detecting a force as the force check value and/or a current consumption detection device for detecting a current consumption of a drive motor of the blade roll (22) as the force check value.

9. The strand granulator (10) according to claim 8, **characterized in that** the strand granulator (10) comprises a display device (50) arranged to display the wear state.

10. The strand granulator (10) according to claim 8 or 9, **characterized in that** the evaluation device (40) is arranged to derive the wear state from the detected force check value in combination with one or multiple further granulation parameter values characterizing the granulation of the strands (100), wherein the strand granulator (10) preferably comprises at least one further detection device (31a, 31b) for detecting the further granulation parameter value or values.

11. Method for wear monitored granulating one or multiple plastic strands (100) comprising the step of granulating (S1) the strands (100) using a blade roll (22) and an anvil blade (26) cooperating therewith,
**characterized by** the further steps:
providing (S0) a data collection in which force check values are associated with wear states of the anvil blade (26) and/or of the blade roll (22),
detecting (S2) at least one force check value which depends on a force applied for granulating the strands (100),
wherein at least a deformation, a force or a current consumption of a drive motor for the blade roll (22) is detected as the at least one force check value, and
displaying (S3*) the detected force check value.

12. Granulation system (12) for wear monitored granulating one or multiple plastic strands (100), comprising
a strand granulator (10) comprising a blade roll (22) and an anvil blade (26) cooperating therewith for granulating the strands (100),
**characterized in that**
the granulation system further comprises a data collection (11) in which force check values are associated with wear states of the anvil blade (26) and/or of the blade roll (22), and
**in that** the strand granulator (10) further comprises:
at least one force check value detection device (30a, 30b, 30c) which is arranged to detect at least one force check value which depends on a force applied for granulating the strands (100),
wherein the force check value detection device (30a, 30b, 30c) has a deformation sensor for detecting a deformation as the force check value and/or a force sensor for detecting a force as the force check value and/or a current consumption detection device for detecting a current consumption of a drive motor of the blade roll (22) as the force check value, and
a display device (50*) which is arranged to display the force check value.

## Revendications

1. Procédé de granulation, à usure contrôlée, d'un ou de plusieurs joncs de matière plastique (100), comprenant l'étape de la granulation (S1) des joncs (100) au moyen d'un cylindre porte-lames (22) et d'un couteau enclume (26) co-agissant avec ce dernier,
**caractérisé par** les autres étapes :
saisie (S2) d'au moins une valeur de test de force qui dépend d'une force appliquée pour la granulation des joncs (100),
cependant qu'au moins une déformation, une force ou une consommation de courant d'un moteur d'entraînement pour le cylindre porte-lames (22) est saisie comme la au moins une valeur de test de force, et
déduction (S3) d'un état d'usure du couteau enclume (26) et/ou du cylindre porte-lames (22) à partir de la valeur de test de force saisie.

2. Procédé selon la revendication 1, **caractérisé en ce que,** lors de la déduction (S3) de l'état d'usure, la au moins une valeur de test de force ou au moins une valeur en étant déduite est comparée avec une ou plusieurs valeurs seuils.

3. Procédé selon une des revendications précédentes, **caractérisé en ce que** la saisie (S2) de la valeur de test de force a lieu de telle façon que, pendant que deux lames successives du couteau enclume (26) entrent en impact avec le jonc ou avec un des joncs (100), quand d'autres valeurs de paramètres caractérisant la granulation (S1) des joncs (100) restent constantes, la valeur de test de force ne présente pas ou seulement de faibles fluctuations, ou que la déduction (S3) de l'état d'usure comprend une réduction de fluctuations de la valeur de test de force qui surviennent pendant que deux lames successives du couteau enclume (26) entrent en impact avec le jonc ou avec un des joncs (100).

4. Procédé selon une des revendications précédentes, **caractérisé par** l'autre étape de l'activation (S5) d'un signal acoustique ou d'un affichage quand un état d'usure est déduit.

5. Procédé selon une des revendications précédentes, **caractérisé en ce que** l'état d'usure est déduit (S3) à partir de la valeur de test de force en combinaison avec une ou plusieurs autres valeurs de paramètres de granulation caractérisant la granulation (S1) des joncs (100).

6. Procédé selon la revendication 5, **caractérisé en ce que** la une ou les autres valeurs de paramètres de granulation consistent en une vitesse de rotation du cylindre porte-lames (22), en une vitesse d'avance des joncs (100), en un nombre de joncs (100) granulés simultanément et/ou en une propriété des joncs (100) telle que diamètre de jonc, fermeté de jonc et/ou matériau de jonc.

7. Procédé selon une des revendications précédentes, **caractérisé par** l'étape de l'affichage (S4) de la valeur de test de force ou de l'état d'usure en étant déduit.

8. Granulateur à joncs (10) destiné à la granulation, à usure contrôlée, d'un ou de plusieurs joncs de matière plastique (100), comprenant
un cylindre porte-lames (22) et un couteau enclume (26) co-agissant avec ce dernier, pour la granulation des joncs (100),
**caractérisé par** :
au moins un équipement de saisie de valeur de test de force (30a, 30b, 30c) conçu pour saisir au moins une valeur de test de force dépendante d'une force appliquée pour la granulation des joncs (100),
un équipement d'évaluation (40) conçu pour déduire un état d'usure du couteau enclume (26) et/ou du cylindre porte-lames (22) à partir de la valeur de test de force saisie,
cependant que l'équipement de saisie de valeur de test de force (30a, 30b, 30c) comporte un capteur de déformation afin de saisir une déformation en tant que valeur de test de force, et/ou comporte un capteur de force afin de saisir une force en tant que valeur de test de force, et/ou comporte un équipement de saisie de consommation de courant afin de saisir une consommation de courant d'un moteur d'entraînement du cylindre porte-lames (22) en tant que valeur de test de force.

9. Granulateur à joncs (10) selon la revendication 8, **caractérisé en ce que** le granulateur à joncs (10) comprend un équipement d'affichage (50) conçu pour afficher l'état d'usure.

10. Granulateur à joncs (10) selon une des revendications 8 ou 9, **caractérisé en ce que** l'équipement d'évaluation (40) est conçu pour déduire l'état d'usure à partir de la valeur de test de force saisie en combinaison avec une ou plusieurs autres valeurs de paramètres de granulation caractérisant la granulation des joncs (100), cependant que le granulateur à joncs (10) comprend de préférence au moins un autre équipement de saisie (31a, 31b) pour la saisie de la ou des autres valeurs de paramètres de granulation.

11. Procédé de granulation, à usure contrôlée, d'un ou de plusieurs joncs de matière plastique (100), comprenant l'étape de la granulation (S1) des joncs (100) au moyen d'un cylindre porte-lames (22) et d'un couteau enclume (26) co-agissant avec ce dernier,
**caractérisé par** les autres étapes :
mise à disposition (S0) d'une collecte de données dans laquelle des valeurs de test de force sont liées à des états d'usure du couteau enclume (26) et/ou du cylindre porte-lames (22),
saisie (S2) d'au moins une valeur de test de force qui dépend d'une force appliquée pour la granulation des joncs (100),
cependant qu'au moins une déformation, une force ou une consommation de courant d'un moteur d'entraînement pour le cylindre porte-lames (22) est saisie comme la au moins une valeur de test de force, et
affichage (S3*) de la valeur de test de force saisie.

12. Système de granulation (12) destiné à la granulation, à usure contrôlée, d'un ou de plusieurs joncs de matière plastique (100), comprenant
un granulateur à joncs (10) comprenant un cylindre porte-lames (22) et un couteau enclume (26) co-agissant avec ce dernier, pour la granulation des joncs (100),
**caractérisé en ce**
**que** le système de granulation (12) comprend en outre une collecte de données (11) dans laquelle des valeurs de test de force sont liées à des états d'usure du couteau enclume (26) et/ou du cylindre porte-lames (22), et
**que** le granulateur à joncs (10) comprend en outre :
au moins un équipement de saisie de valeur de test de force (30a, 30b, 30c) conçu pour saisir au moins une valeur de test de force dépendante d'une force appliquée pour la granulation des joncs (100),
cependant que l'équipement de saisie de valeur de test de force (30a, 30b, 30c) comporte un capteur de déformation afin de saisir une déformation en tant que valeur de test de force, et/ou comporte un capteur de force afin de saisir une force en tant que valeur de test de force, et/ou comporte un équipement de saisie de consommation de courant afin de saisir une consommation de courant d'un moteur d'entraînement du cylindre porte-lames (22) en tant que valeur de test de force, et
un équipement d'affichage (50*) conçu pour afficher la valeur de test de force.
